# EUROPEAN PATENT APPLICATION

(11) **EP 4 714 759 A1**
(43) Date of publication of application: **25.03.2026**
(21) Application number: 24207657.8
(22) Date of filing: 18.10.2024
(51) Int. Cl.: B60S 9/08

(54) **DEVICE AND SYSTEM FOR LIFTING A VEHICLE AND VEHICLE**

(30) Priority: 24.09.2024 CN 202411336925
(71) Applicant: Carman Enterprise Co., Ltd, Hangzhou 311121 (CN)
(72) Inventor: Xianwei, Li, Yuhang District, Hangzhou (CN)
(74) Representative: Paul & Albrecht Patentanwälte PartG mbB

(57) **Abstract**

The present invention relates to a device (2) for lifting a vehicle (1), in particular a caravan or a motorhome, wherein the device (2) has a lifting unit (6),
wherein the lifting unit (6) comprises
a plurality of profile elements, in particular exactly three profile elements, which are arranged coaxially to each other and can be displaced telescopically to each other, thus defining a longitudinal axis (X), so that the profile elements can be moved between a retracted position and an extended position in order to vary an effective length of the device (2),
and drive means that are coupled to the profile elements in order to move the profile elements relative to each other and to adjust an effective length of the device (2),

wherein the drive means comprise a spindle drive (19).

## Description

The present invention relates to a device for lifting a vehicle, in particular a caravan or a motorhome, which device has a lifting unit.

Furthermore, that invention relates to a system comprising a plurality of such devices and a vehicle, in particular a caravan or a motor home, with such a system.

Very often, camping sites such as commercial camping grounds or camp sites in the wilderness often do not have a perfect horizontal ground. Consequently, it is difficult to achieve a perfect horizontal standing of a motorhome or a camp van which reduces the comfort for the users. Consequently, it is maybe difficult or even impossible to achieve a horizontal position, which is in particular uncomfortable when lying or sleeping in such a vehicle.

In order to avoid this problem, specific leveling systems exist, which can be attached to a bottom side of a vehicle and which can lift the vehicle in order achieve a horizontal position. Preferably, such a system comprises a plurality of devices, which each comprise a lifting unit and wherein the devices are arranged at different positions at a bottom side of the vehicle. An effective length of each device/ lifting unit can be varied in order lift a vehicle at different points so that a perfect adaption to the ground can be realized and the vehicle can be brought into a horizontal position.

Existing systems comprise a plurality of devices each having a lifting unit with a hydraulic system. Such a hydraulic system is characterized by a high power-to-weight ratio, but is expensive and needs significant maintenance efforts.

Based on this, it is the object of the present invention to provide an alternative device and an alternative system for lifting a vehicle, in particular a caravan or a motorhome, which in particular is easy to be operated and reliable and preferably does not require intensive maintenance.

This object is solved by a device for lifting a vehicle as mentioned at the beginning, wherein the lifting unit comprises a plurality of profile elements, in particular exactly three profile elements, which are arranged coaxially to each other and can be displaced telescopically to each other, thus defining a longitudinal axis, so that the profile elements can be moved between a retracted position and an extended position in order to vary an effective length of the device, and drive means that are coupled to the profile elements in order to move the profile elements relative to each other and to adjust an effective length of the device, wherein the drive means comprise a spindle drive. Preferably, the device can be arranged between a bottom side of a vehicle to be lifted and the ground.

The invention is based on the consideration to provide a telescopic arrangement, which comprises a plurality of profile elements. These profile elements may be made of an extruded aluminum profile and can be displaced telescopically to each other. In other words, in a retracted position, the profile elements are arranged one inside the other so the effective length of the device is relatively short. If it is intended to lift a vehicle, the profile elements are displaced telescopically towards their extended position in order to increase the effective length of the device, wherein the device supports against the ground. Accordingly, in case that the lifting unit comprises exactly three profile elements, one profile element can be considered as an upper profile element, one profile element can be considered as an intermediate profile element and one further profile element can be considered as a lower profile element. These definitions refer to the extended position, when the device is attached to a vehicle and the longitudinal axis extends at least substantially in a vertical direction. Preferably, the upper profile element corresponds to the outer profile element and the lower profile element corresponds to the inner profile element, with respect to the longitudinal axis, when the profile elements are in their retracted position. The effective length may be defined as the total length of the device, i.e. the distance between the bottom side of a vehicle and the lowest end of the device, when the device is mounted to a vehicle, or as the total length of the profile elements, i.e. the distance between an upper end of the upper profile element and a lower end of the lower profile element.

It is provided that the drive means comprise at least one spindle drive, in particular exactly one spindle drive. Accordingly, the movement of the profile elements between the retracted position and the extended position is realized by a spindle drive and not by a hydraulic system, which reduces the maintenance efforts and is more cost effective. The spindle drive may be characterized in that it comprises, for each stage, one spindle having an outer thread and a corresponding spindle nut being in engagement with the spindle so that a rotary movement of the spindle can be converted into an axial movement of the spindle nut when the spindle rotates relative to the spindle nut. Preferably, the spindle drive is self-impeding or self-locking, which in particular means that an unintended rotation of the spindle nut relative to the spindle is not possible. In this case no specific brakes are necessary in order to avoid an unintended movement of the spindle nut relative to the corresponding spindle and consequently an unintended change of the effective length of the device.

The profile elements may comprise guiding means in order to guide the profile elements relative to each other. These guiding means may comprise protrusions and grooves in particular extending in the longitudinal direction. In concrete terms, the outer profile element may comprise protrusions at its inner side which engage into corresponding guiding grooves formed in the intermediate profile element. In the same manner, the intermediate profile element may comprise guiding protrusions which engage into corresponding guiding grooves formed in the inner profile element.

According to a preferred embodiment, the spindle drive is formed as a multiple-stage spindle drive, in particular as a two-stage spindle drive. Such a multiple-stage spindle drive allows a stable movement and reduces the wearing acting on the spindles.

In concrete terms, the spindle drive may comprise a first spindle, which is held rotatably at an upper profile element, and a first spindle nut which is in engagement with said first spindle and is connected in an axially fixed manner to another profile element, in particular to an intermediate profile element. In this way, a rotary movement of the first spindle can be converted to an axial movement of the other profile element, in particular of the intermediate profile element relative to the upper profile element.

The spindle drive may comprise a second spindle which is held rotatably at a profile element, in particular at an intermediate profile element, and a second spindle nut, which is in engagement with a second spindle and is connected in an axially fixed manner and in a rotationally fixed manner to another profile element, in particular to a lower profile element, so that a rotary movement of the second spindle is converted into an axial displacement of the other profile element, in particular to the lower profile element relative to the intermediate profile element. Such a two-stage spindle drive in particular in connection with three profile elements displaceable telescopically relative to each other lead to a space- and weight-saving design and allows a significant reduction in wearing compared to a single-stage spindle drive.

The first spindle nut may be held rotatably at the intermediate profile element, in particular at a sleeve formed at or fixed to the intermediate profile element, and is connected in a rotationally fixed manner to the second spindle. According to this embodiment, the two-stage spindle drive may have one degree of freedom, as, when the profile elements are moved from their retraced position into their extended position, it is open whether at first the lower profile element is moved relative to the intermediate profile element or the intermediate profile element is moved relative to the upper profile element.

According to a preferred embodiment, one of the spindles, in particular the second spindle, may be formed as a hollow spindle and the other spindle, in particular the first spindle, may be arranged radially inside the second spindle, when the profile elements are in their retracted position. The first spindle, which may also be considered as an upper spindle, may be made of full-material. The second spindle, which forms a lower spindle, when the profile elements are in their extended position, may have an inner through-opening having a diameter higher than the outer diameter of the first spindle.

Stop means may be provided in order to limit the axial movement of the first spindle nut relative to the first spindle. In this way, it is avoided that the spindle nut loosens from the spindle. Preferably, the stop means comprise a radial protrusion which is arranged at a bottom end of the first spindle. The radial protrusion may be formed in a single-piece design with the first spindle or as a plate, which is fixed to the first spindle, in particular screwed thereto.

Further stop means may be provided in order to limit the movement of the second spindle nut relative to the second spindle.

Bearing means may be provided in order to hold the first and the second spindle rotatably at a (corresponding) profile element. These bearing means may comprise roller bearings, in particular axial and/or radial roller bearings.

The drive means may comprise an electrical drive motor, wherein the motor axis extends parallel to the longitudinal axis. In other words, the motor may be arranged such that its motor axis extends parallel to the longitudinal axis defined by the telescopic displacement of the profile elements.

According to a preferred embodiment, transmission means are provided in order to convert a rotary movement of the drive motor into a rotary movement of a spindle of the spindle drive, in particular of the inner and/or first spindle of the spindle drive. In concrete terms, the transmission means may comprise a planetary gear, in particular a one-stage or a two-stage planetary gear. Such a planetary gear allows a high gear ratio so that a relatively high speed of rotation of the drive motor can be converted into a comparatively low speed of rotation of an output shaft of the planetary gear. Preferably, the planetary gear is arranged coaxially with the motor axis. The planetary gear and the drive motor may be formed integrally as a construction unit.

The transmission means may comprise a chain gear, wherein one chain wheel is connected in a rotationally fixed manner to a spindle of the spindle drive, in particular to the first and/or upper and/or inner spindle of the spindle drive, and the other chain wheel may be connected to an output shaft of the drive motor or of the planetary gear. In other words, the distance between the output shaft, which preferably extends parallel to the spindle drive and/or the longitudinal axis, and a spindle of the spindle drive is bridged by a chain gear.

Preferably, the drive means comprise manual operating means, which are arranged and designed such that an operator can adjust the effective length of the lifting unit in particular by hand and/or without the use of a drive motor. This embodiment is based on the consideration to provide a possibility for an operator to move the profile elements relative to each other in order to adjust the effective length of the device even if the drive motor cannot be operated for example if no electrical energy is available.

In concrete terms, the operating means may comprise an engagement contour, in particular having a quadratic or a hexagonal cross-section, so that an operator can bring a corresponding tool in engagement in order to vary and/or adjust the effective length of the lifting unit. The engagement contour may be arranged at an auxiliary shaft, which is held rotatably at the lifting unit. The engagement contour may be coupled to a spindle of the spindle drive, in particular via a bevel gear. Preferably, the engagement contour is coupled via a bevel gear to an output shaft of the drive motor or of the planetary gear. According to a preferred embodiment, the auxiliary shaft carrying the engagement contour extends perpendicularly to the longitudinal axis and/or to the output shaft of the drive motor or of the planetary gear. In this way, it can be ensured that a rotation of the engagement contour is translated into a rotation of a spindle of the spindle drive.

The device may further comprise an upper mounting element, which is in particular formed as a plate. This upper mounting element may have mounting means in order to attach the device to a bottom side of the vehicle. In concrete terms, the mounting means may comprise a plurality of through-holes extending through the mounting element in order to screw the upper mounting element on the bottom side of a vehicle.

The lifting unit may be held rotatably about a pivot axis at the mounting element between a use position, in which the longitudinal axis extends at least substantially vertically, when the device is mounted to a vehicle, and a transport position, in which the longitudinal axis extends at least substantially horizontally, when the device is mounted to a vehicle. This embodiment is based on the consideration that the device should remain permanently at the vehicle. When the device is not in use, in particular when the vehicle is driven, the lifting unit may be in a transport position, in which the longitudinal axis extends at least substantially horizontally. In this position, the device is spaced apart from the ground so that the car can be driven on streets. When the device should be used in order to lift the vehicle, in particular on a camping site, the lifting unit can be brought from its transport position into its use position, so that the longitudinal axis extends at least substantially vertically so that a movement of the profile elements towards their extended position increases the effective length of the device in order to lift the vehicle. In other word, in its use position, the longitudinal direction points from the bottom side of a vehicle towards the ground.

In order to move the lifting unit between its use position and its transport position, the device may comprise a rotation mechanism. In concrete terms, the rotation mechanism may be designed and arranged such that a rotary movement of the drive motor and/or of the spindle is converted into a rotary movement of the lifting unit relative to the mounting element. In other words, no specific drive means may be provided in order to move the lifting unit from its transport position into its use position and vice versa. Moreover, the drive means may not only be used in order to move the profile elements between their retracted position and their extended position, but also to move the lifting unit between its transport position and its use position.

In a preferred embodiment, the rotation mechanism may be such that the lifting unit is moved from its transport position towards its use position, when the profile elements are moved out of their fully retracted position towards their extended position. More specifically, the rotation mechanism may comprise a pressure bar, which is held rotatably about a swivel axis at the mounting element, wherein the swivel axis is spaced apart from the pivot axis. The swivel axis and the pivot axis may extend parallel to each other. The pressure bar may be guided by a guiding element, which is fixed in particular to a lower end section of an outer/upper profile element. The pressure bar may be arranged such that it can abut against a protrusion, in particular formed as an intermediate plate, at the lower profile element, when the profile elements are close to their retracted position, so that a movement of the profile elements towards their retracted position leads to a rotary movement of the lifting unit towards its transport position, and a movement of the profile elements out of the (at least nearly fully) retracted position leads to a rotary movement of the lifting unit towards its use position. In other words, a first section of the movement range of the profile elements out of their retracted position does not only lead to a movement of the profile elements, but, via the pressure bar being in abutment with the corresponding protrusion, also leads to a rotary movement of the lifting unit about the pivot axis in order to move the lifting unit of its transport position into its use position. Once the use position is reached, a further movement of the profile elements towards their extended position brings the pressure bar out of contact from the protrusion so that no further rotary movement of the lifting unit relative to the upper mounting element is possible. In order to avoid an unintended rotation of the pressure bar about the swivel axis, a guiding element may be provided, in particular fixed to the upper and/or outer profile element, which is designed to limit the rotary movement of the pressure bar about the swivel axis.

The rotation mechanism may further comprise retracting means. In particular, the retracting means may comprise a tension spring, which is held, at one end, at the mounting element and, at the other end, at a profile element, in particular at the upper profile element, preferably at the guiding element. Preferably, the lengthwise axis of the pressure bar and effective axis of the tension spring are arranged in a form of an X, when seen from a lateral side and when the lifting unit is in its use position. The arrangement may be such that the tension spring is in a relaxed state or near a relaxed state, when the lifting unit is in its use position, and that the tension spring is in a biased state, when the lifting unit is in its transport position.

Preferably, the lifting unit comprises a support element, which is designed to support the device against the ground when the device is mounted to a vehicle. The support element may be held rotatably a lower profile element, wherein the rotation axis of the support element relative to the lower profile element may preferably extend perpendicularly to the longitudinal axis. The support element may be formed as a plate in order to distribute the gravity force of the vehicle on a relatively large surface. In this way, the device can also be used when the vehicle is parked in soft surfaces.

The device may further comprise a control unit which is arranged and designed to control the position and/or speed of the profile elements relative to each other and, consequently, preferably the effective length of the device. In particular, the control unit may be arranged and designed to control the direction and speed of rotation of the drive motor. Preferably, the control unit comprises communication means, which are arranged and designed such that they can communicate with a remote control unit, in particular via a wireless connection, preferably via a Bluetooth connection. In other words, it may be provided that a remote control unit is used to control the direction and speed of rotation of the drive motor and, consequently, of the effective length of the device. In this way, a vehicle with at least one device attached thereto can be leveled easily in order to achieve an at least substantially horizontal position.

The object underlying the invention is also solved by a system comprising a plurality of devices, in particular comprising exactly four devices, as described above. Preferably, the communication means of the devices are designed and arranged to communicate with one single remote control unit. The system may comprise such a remote control unit. In other words, one control unit can be used to control and to adjust all the devices attached to a vehicle. Preferably, the remote control unit is designed such that the effective length of the devices can be adjusted individually.

The object is also solved by a vehicle, in particular a caravan or a motorhome, with such a system. Preferably, the devices of the system are each arranged in proximity to a wheel of the vehicle.

With regard to the embodiment of the invention, reference is also made to the sub-claims and to the following description of an exemplary embodiment with reference to the attached drawing. In the drawing shows:
- Figure 1: a vehicle with a system according to the invention, wherein the lifting units of the devices are in their transport position;
- Figure 2: the vehicle of figure 1, wherein the lifting units are in their use position;
- Figure 3: a device according to the invention of the system in a perspective view;
- Figure 4: the device of figure 3 in a partial cross-sectional side view;
- Figure 5: the device of figure 3, wherein the lifting unit is in its transport position, in a perspective view;
- Figure 6: the device of figure 3 in a partial cross-sectional perspective view;

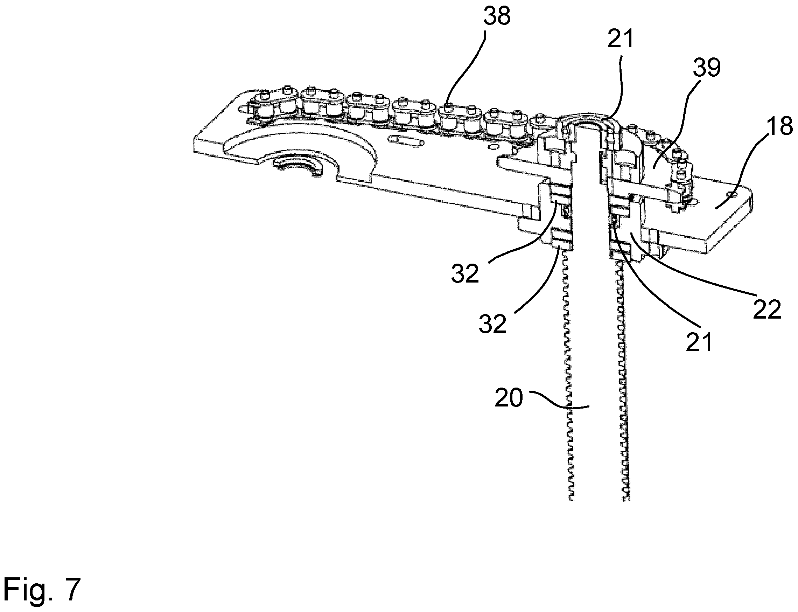

- Figure 7: a part of the drive means of the device of figure 3 in a partial cross-sectional perspective view;

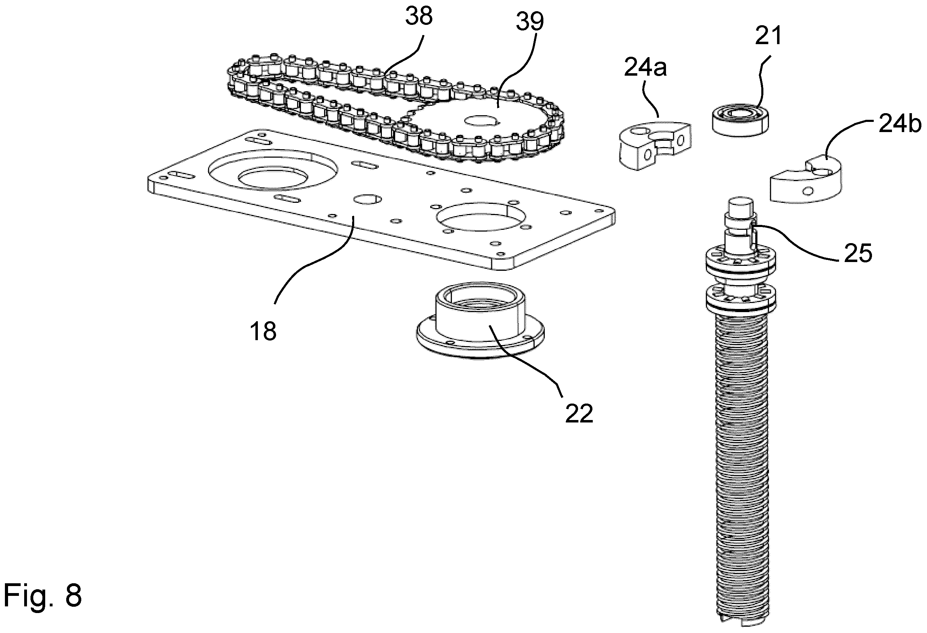

- Figure 8: a partial exploded perspective view of an upper part of the drive means of the device of figure 3;

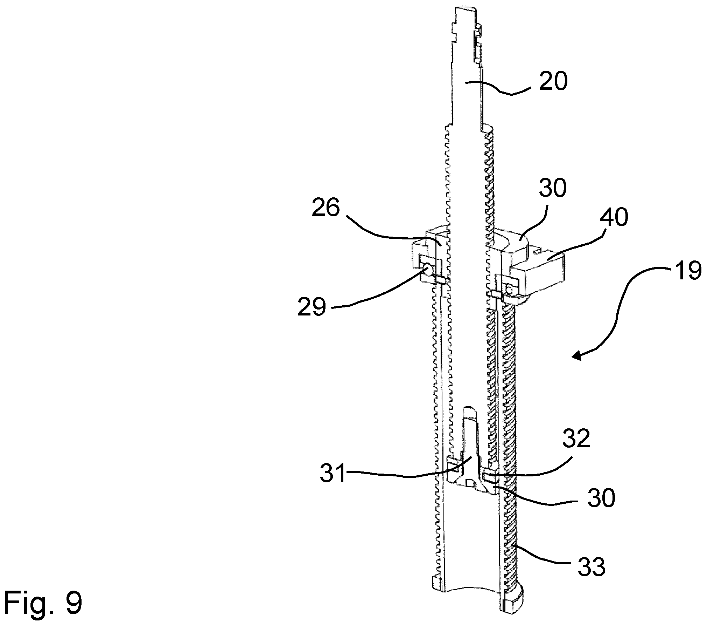

- Figure 9: the spindle drive of the device of figure 3 in a cross-sectional perspective view;

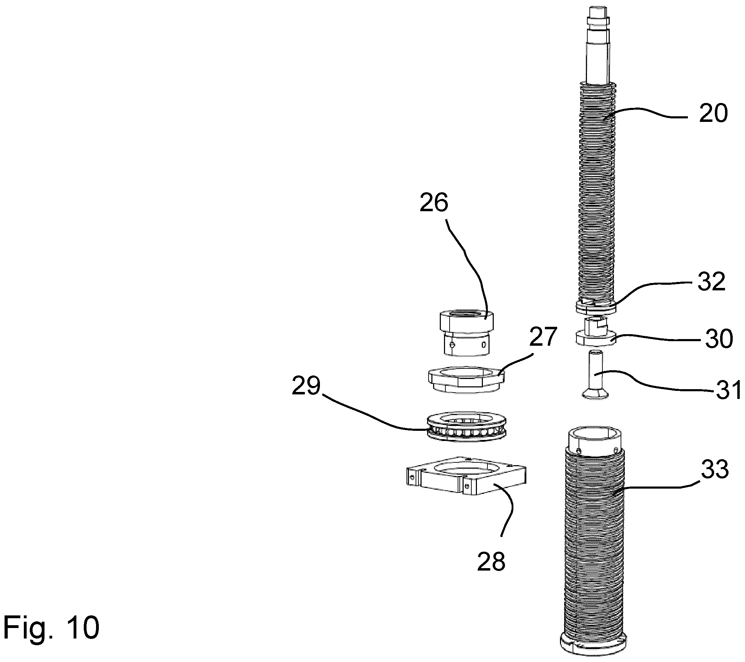

- Figure 10: the spindle drive shown in figure 9 in an exploded perspective view;
- Figure 11: a lower part of the lifting unit in a cross-sectional perspective view;

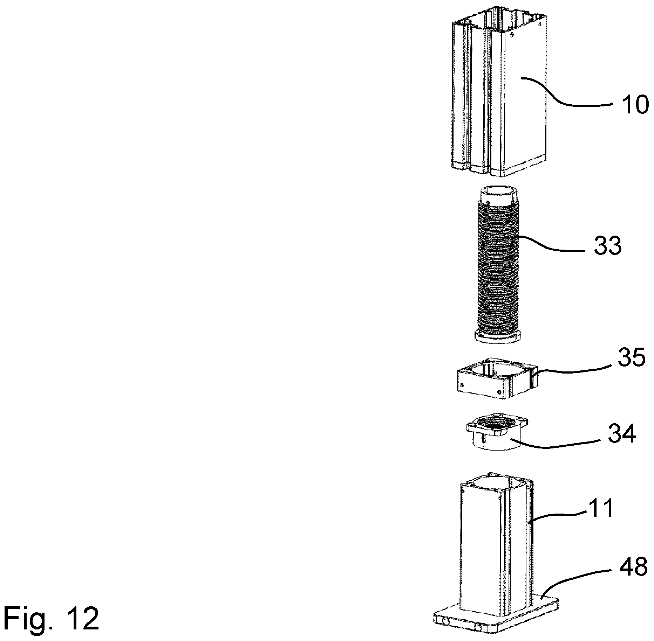

- Figure 12: the lower part of the lifting unit shown in figure 11 in an exploded perspective view;
- Figure 13: the profile elements of the device of figure 3 in a perspective view;
- Figure 14: the profile elements shown in figure 13 in a top view;
- Figure 15: different positions of the lifting unit relative to the mounting plate when the lifting unit is brought from its transport position into its use position;
- Figure 16: different positions of the lifting unit relative to the mounting element, when the lifting element is brought from its use position into its transport position; and
- Figure 17: a partial view of the vehicle with a device according to the invention, wherein a tool is an engagement with the manual operating means.

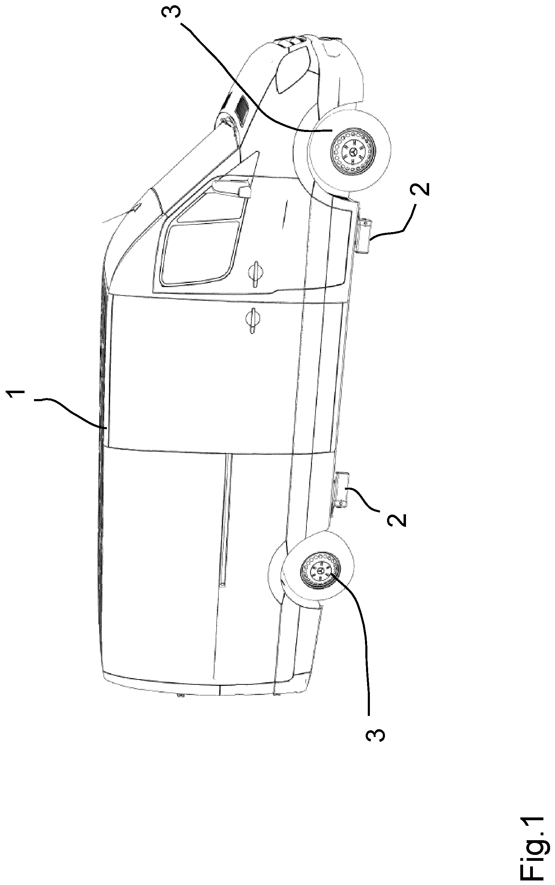

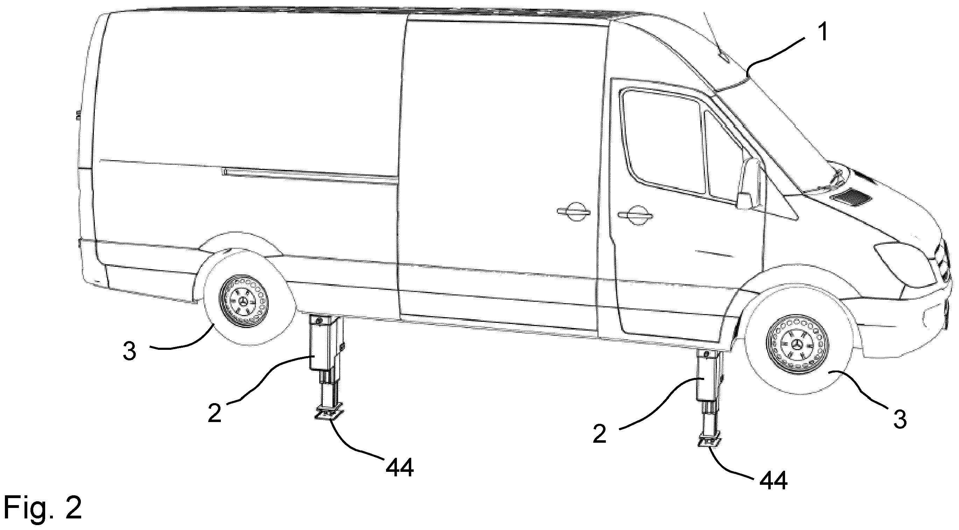

Figure 1 and figure 2 show a vehicle with a system according to the invention attached thereto. The system comprises in total four devices 2 for lifting the vehicle 1, wherein the devices 2 are arranged between a bottom side of the vehicle 1 and the ground. The devices 2 are arranged in proximity to the wheels 3 of the vehicle.

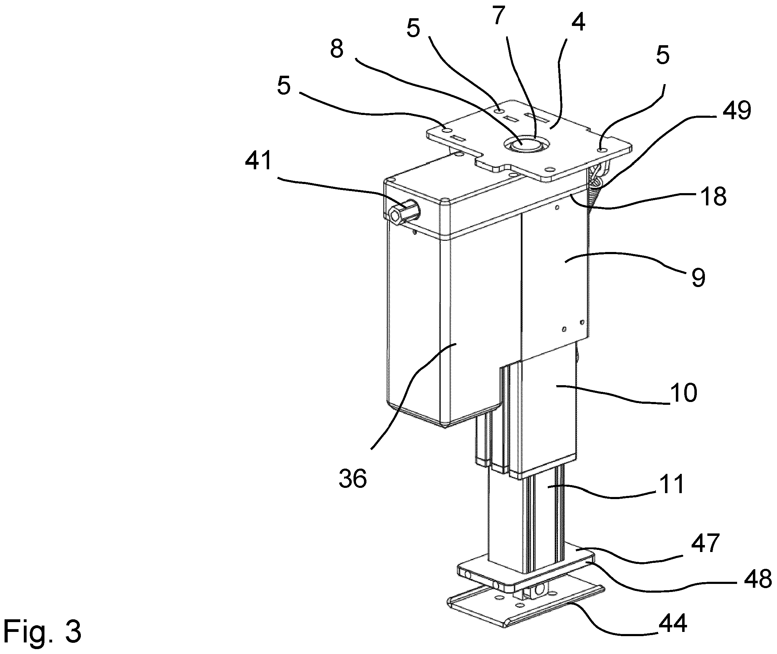

The devices 2 according to the invention are shown in detail in figures 3 to 6. Each device comprises a mounting element 4, which is formed as a plate and has mounting means in the form of several through-holes 5 in order to attach the device 2 to a bottom side of a vehicle 1.

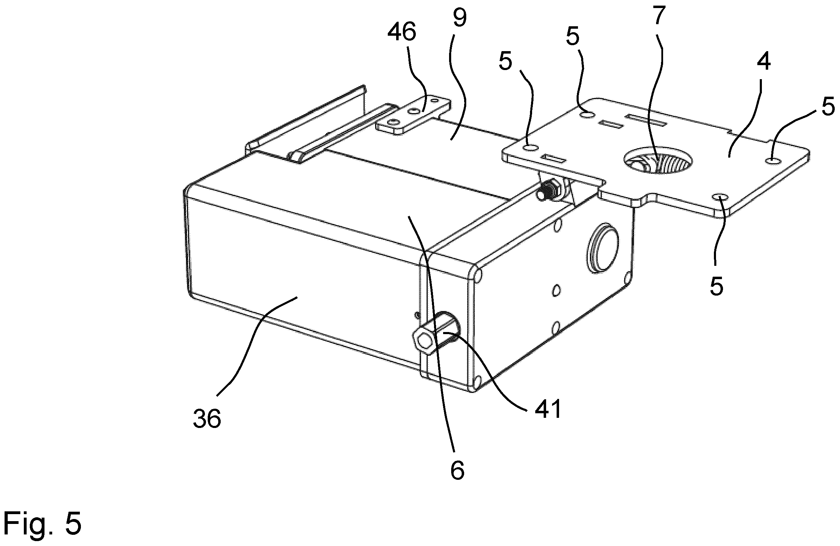

The device 2 further comprises a lifting unit 6, which is held rotatably about a pivot axis P at the mounting element 4 between a use position, which is shown for example in figures 3, 4 and 6, and a transport position, which is shown in figure 5 for example. According to a preferred embodiment, the mounting element 4 further comprises a central opening into which a corresponding projection of the lifting unit 6 extends, when the lifting unit 6 is in its use position. An upper end face of the lifting unit 6 may lie against a bottom side of the mounting element 4, when the lifting unit 6 is in its use position.

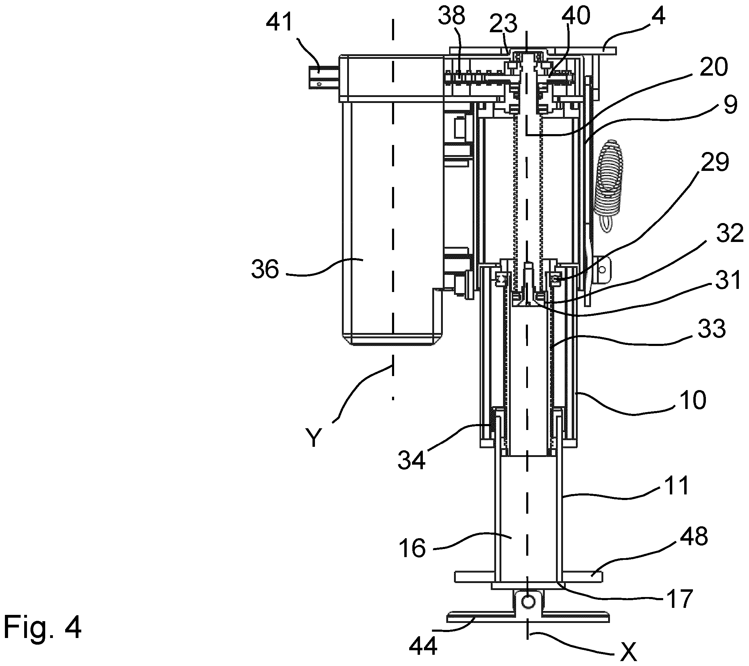

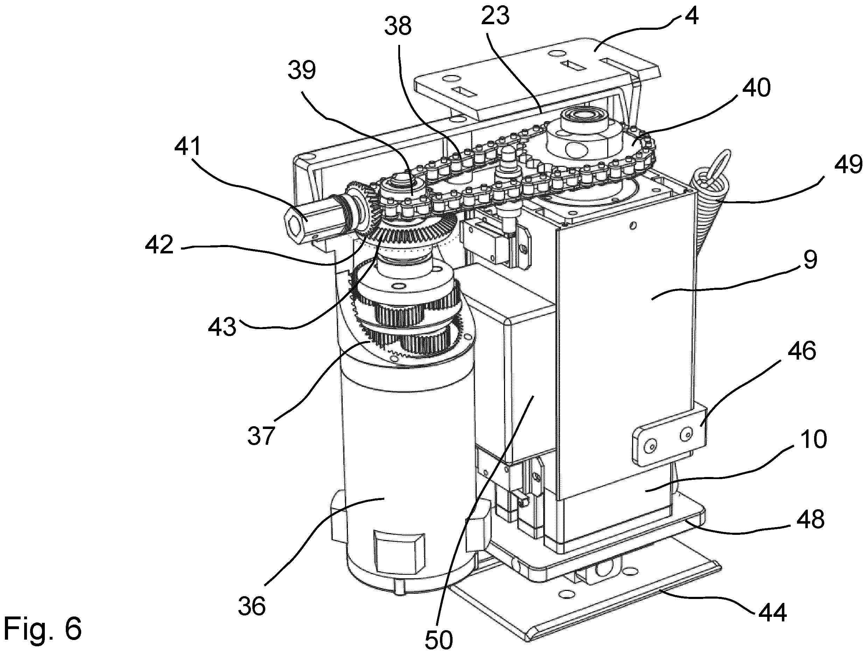

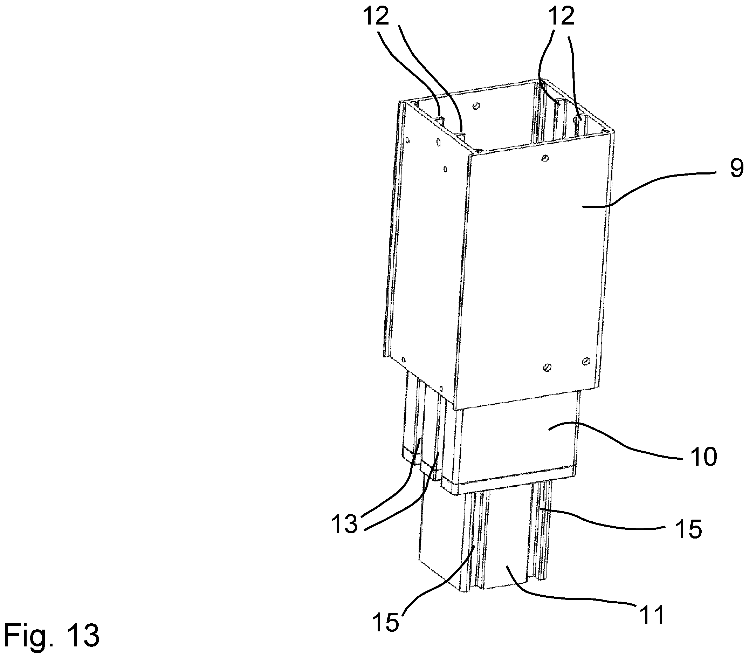

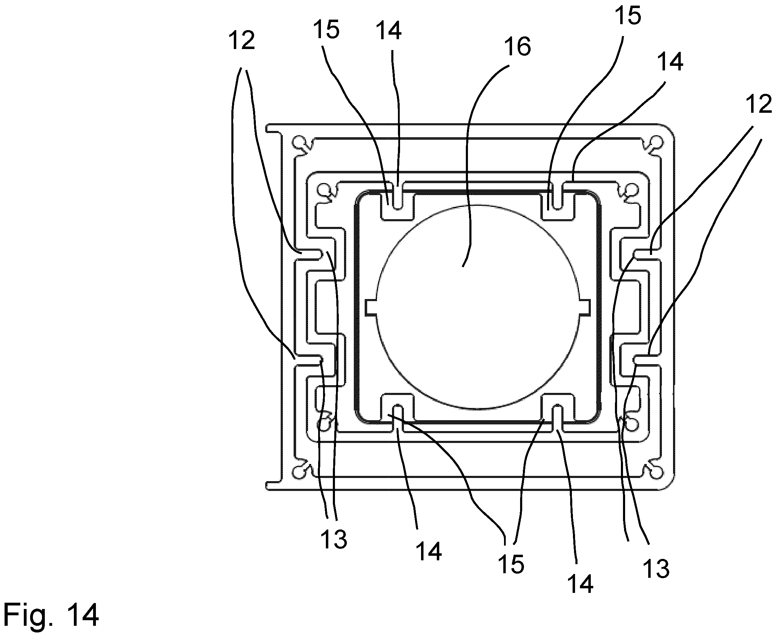

The lifting unit 6 comprises in total three profile elements 9, 10, 11, which are made of extruded aluminum profiles. As it is visible in figures 13 and 14 which only show the profile elements 9, 10, 11, the profile elements 9, 10, 11 are arranged coaxially to each other and can be displaced telescopically relative to each other. They define a longitudinal axis X. The profile elements 9, 10, 11 can be moved between a retracted position, which is for example shown in figure 6, and an extended position, which is shown for example in figures 3 and 4, in order to vary an effective length of the device 2.

One profile element 9 forms an upper and an outer profile element, another profile element 10 forms an intermediate profile element and the further profile element 11 forms a lower/inner profile element. Preferably, each profile element has a substantially rectangular or quadratic cross-section. The upper profile element 9 has on two opposite side walls guiding protrusions 12 which extend in the longitudinal direction X and protrude towards the inner side of the profile element 9. The guiding protrusions 12 engage into corresponding guiding grooves 13 formed in the intermediate profile element 10. In this way, the intermediate profile element 10 is guided when it is moved relative to the upper profile element 9. In the same manner, but rotated at about 90° about the longitudinal axis X, the intermediate profile element 10 has on its inner wall on two opposite side walls guiding projections 14 facing inwardly. They engage into corresponding guiding deepenings 15 formed in the lower profile element 11. The lower profile element 11 has a central opening 16, which engages from a top side into the lower profile element 11 along the longitudinal axis X until a bottom wall 17, which closes the bottom side of the lower profile element 11. The upper end of the upper profile element 9 is fixed to a basic element 18 in the form of a plate.

The lifting unit 6 further comprises drive means that are coupled to the profile elements 9, 10, 11 in order to move the profile elements 9, 10, 11 relative to each other and to adjust an effective length of the device 2.

The drive means comprise one spindle drive 19, which is presently formed as a two-stage spindle drive. The spindle drive 19 comprises a first, upper spindle 20, which is held rotatably at the upper profile element 9, according to a preferred embodiment at the basic element 18. A roller bearing 21 is provided, which is arranged in a bearing sleeve 22, that is screwed to the basic element 18. A further roller bearing 21 is provided, which supports the first spindle 20 at an upper end plate 23 of the lifting unit 6. Two clamping elements 24a, 24b which engage around the spindle 20 and into a holding groove 25 formed in the spindle 20 serve to hold the spindle 20 axially at the basic element 18.

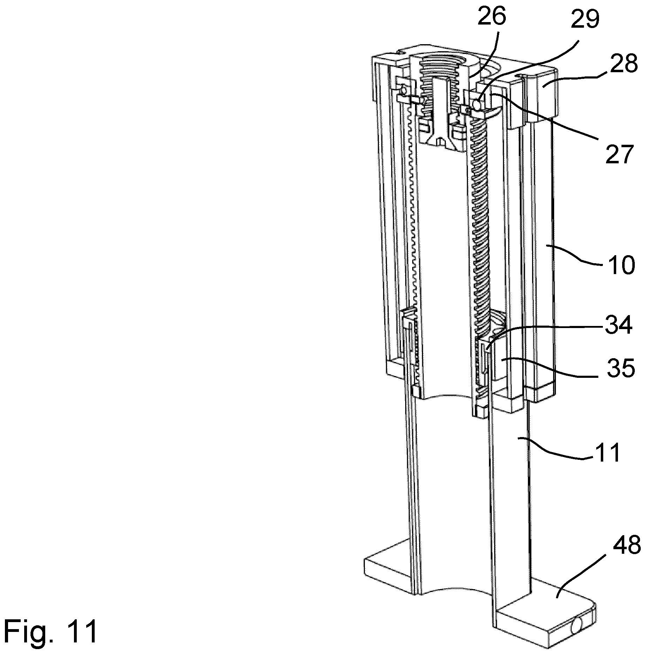

The spindle drive further comprises a first spindle nut 26, which is in engagement with the first spindle 20. The first spindle nut 26 is connected in an axially fixed manner to the intermediate profile element 10, but is held rotatably at the intermediate profile element 10, presently at a sleeve 27 fixed a top plate 28 of the intermediate profile element 10. In concrete terms, as it is visible for example in figure 11, the spindle nut is held rotatably at the intermediate profile element 10 by means of an axial roller bearing 29.

Stop means are provided in order to limit the axial movement of the first spindle nut 26 relative to the first spindle 20, thus defining an end position.

The stop means comprise a radial protrusion 30 which is formed as a plate which is screwed by means of a screw 31 to the axial end of the first spindle 20. Above this radial protrusion 30, sliding discs 32 preferably are provided in order to avoid an unintended blocking of the first spindle nut 26, when it should be moved out of its end position.

The spindle drive 19 further comprises a second spindle 33, which is held rotatably at the intermediate profile element 10 and is connected in a rotationally fixed manner to the first spindle nut 26, in concrete terms via several radially extending screws. A second spindle nut 34 is in engagement with the second spindle 33 and is connected in axially and in a rotationally fixed manner to the lower profile element 11. In this way, a rotary movement of the second spindle 33 is converted into an axial displacement of the lower profile element 11 relative to the intermediate profile element 10. A top element 35 is attached at the upper end of the lower profile element 11, which secures the second spindle nut 34.

As it is visible in figure 11 for example, the second spindle 33 is formed as a hollow spindle and the first spindle 20 is made of full material and is arranged radially inside the second spindle 33 when the profile elements 9, 10, 11 are in their retracted position.

The drive means further comprise an electrical drive motor 36, wherein the motor axis Y extends parallel to the longitudinal axis X. Transmission means are provided in order to convert a rotary movement of the drive motor 36 into a rotary movement of the first spindle 20 of the spindle drive 19. The transmission means comprise a two-stage planetary gear 37, which is arranged coaxially with the motor axis Y.

Furthermore, the transmission means comprise a chain gear 38, wherein one chain wheel 39 is connected in a rotationally fixed manner to the first spindle 20, in the present case by means of feather key connection, and the other chain wheel 40 is connected in a rotationally fixed manner to an output shaft of the planetary gear 37.

The drive means further comprise manual operating means, which are arranged and designed such that an operator can adjust the effective length of the lifting unit 6 or of the device 2 without operating the drive motor 36.

The manual operating means comprise an engagement contour 41 having a hexagonal cross-section, which is provided at an auxiliary shaft 42 that is held rotatably at a wall of the lifting unit 6. Preferably, the axis of the auxiliary shaft 42 extends perpendicularly to the motor axis Y and/or the longitudinal axis X, and in particular parallel to the pivot axis P.

The engagement contour 41 is coupled to the first spindle 20, presently via a bevel gear 43 to an output shaft of the planetary gear 32.

The device 2 further comprises a support element 44, which is designed to support the device against the ground when the device 2 is mounted to the vehicle 1. In concrete terms, the support element 44 is held rotatably at the lower profile element 11. The rotation axis of the support element 44 extends perpendicularly to the longitudinal axis X. Preferably, the effective length of the device 2 corresponds to the distance between the upper end of the mounting element 4 and the lower end of the support element 44.

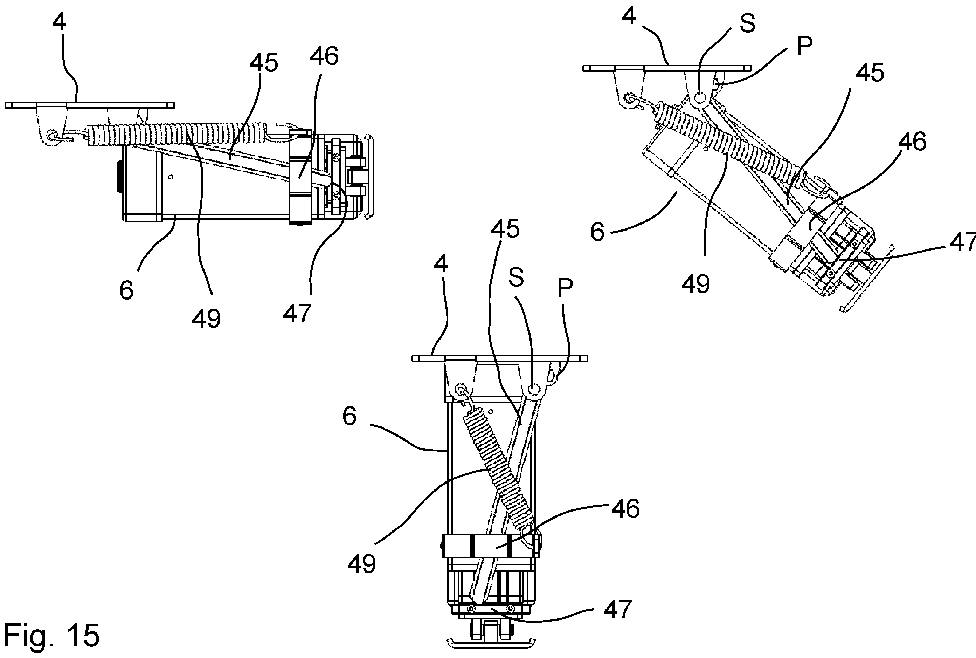

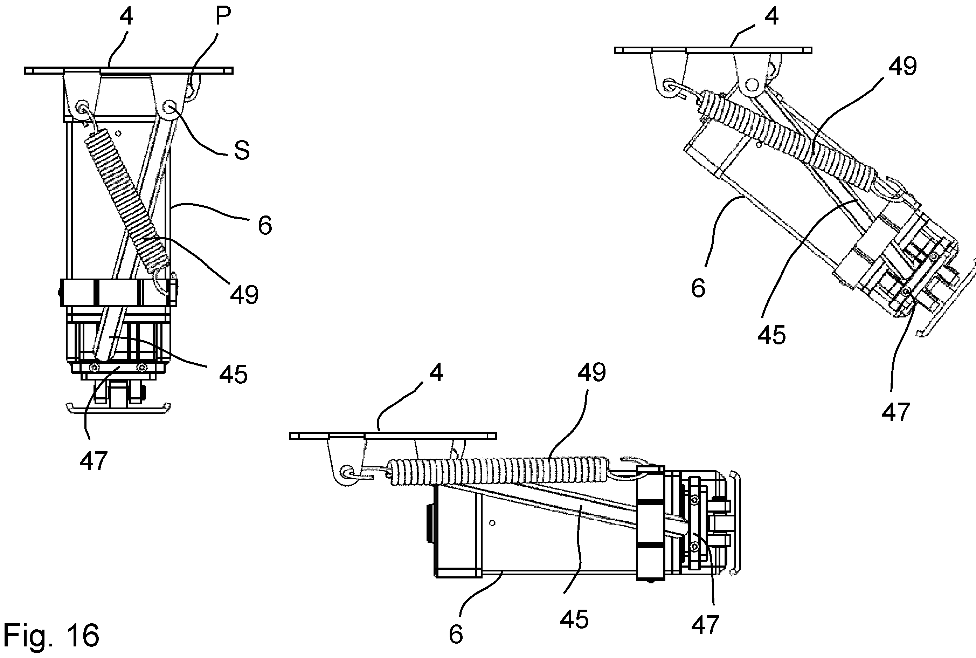

The device 2 further comprises a rotation mechanism in order to move the lifting unit 6 between its use position and its transport position. This mechanism is shown in detail in figures 15 and 16, wherein figure 15 shows a movement from the transport position towards the use position and figure 16 shows the movement from the use position towards the transport position. The rotation mechanism is designed and arranged such that a rotary movement of the drive motor 36 and/or of the first spindle 20 and/or the second spindle 33 is converted into a rotary movement of the lifting unit 6 relative to the mounting element 4. The rotation mechanism comprises a pressure bar 45, which is held rotatably about a swivel axis X at the mounting element 4. The swivel axis X is spaced apart from the pivot axis P, but extends parallel thereto. The pressure bar 45 is guided by a guiding element 46 which is fixed to a bottom end section of the upper profile element 9. The guiding element 46 is arranged such that the rotary movement of the pressure bar 45 is limited, in particular such that the pressure bar 45 extends substantially downwardly when the lifting unit is in its use position.

The pressure bar 45 is arranged such that it can abut against a protrusion 47 which is formed as an intermediate plate 48 at the lower profile element 11. When the profile elements 9, 10, 11 are close to their retracted position, a movement of the profile elements 9, 10, 11 towards their retracted position leads to a rotary movement of the lifting unit 6 towards the transport position. Vice versa, a movement of the profile elements 9, 10, 11 out of the retracted position leads to a rotary movement of the lifting unit 6 towards its use position.

The rotation mechanism comprises retracting means in order to move the lifting unit 6 towards the use position. Preferably, the retracting means are biased such that the lifting unit 6 can be moved towards the use position. The retracting means comprise a tension spring 49, which is held, at one end, at the mounting element 4 and, at the other end, at the guiding element 46. The lengthwise axis of the pressure bar 45 and the effective axis of the tension spring 49 are arranged in the form of an X, when seen from a lateral side, as for example in figures 15 and 16, and when the lifting unit 6 is in its use position. As it is visible for example at the bottom of figure 15 and on the left side of figure 16, the swivel axis S of the pressure bar 46 is preferably arranged at a laterally opposite side from the upper end of the tension spring 49.

When the devices 2 are mounted to the vehicle 1, as it is visible in figure 1, the lifting units 6 are in their transport position, wherein the longitudinal axis X extends substantially horizontally, the drive motor 36 can be set in rotation. For this purpose, the device comprises a control unit 50, which is arranged, as it is visible for example in figure 6, directly adjacent to the upper profile element 9 and is designed to control the direction and speed of rotation of the drive motor 36. Via the planetary gear 37 and the chain gear 38, the first spindle 20 is set in rotation. Due to the rotationally fixed connection of the first spindle nut 26 and the second spindle 34 and due to the second spindle nut 34, which is connected in an axially and rotationally fixed manner to the lower profile element 11, the profile elements 9, 10, 11 are moved out of their retracted position. In a first phase, as it is visible in figure 15, due to the retracting force of the tension spring 49 and the movement of the intermediate plate 48 away from the pressure bar 45, the lifting unit 6 is set in rotation relative to the mounting element 4 towards its use position as shown in figure 15 on the right side. Once the pressure bar 45 does not more abut against the protrusion 47, no further rotation occurs. In this state, which is shown in figure 15 on the right side and in figure 16 on the left side, the tension spring 49 is in a nearly relaxed position. Furthermore, an upper side of the lifting unit 6 abuts against a bottom side of the mounting element 4. The projection 8 extends through the central opening 7 formed in the mounting element 4.

A further movement of the electrical drive motor 36 further brings the profile elements 9, 10, 11 towards their extended position, which is shown in Figure 2. In this position, the vehicle 1 is lifted up from the ground. In concrete terms, a support plate 44 supports the devices 2 against the ground. This support plate 44 is held pivotably at the lower profile element 11.

The inverse movement is shown in figure 16. From their extended position, the profile elements 9, 10, 11 are moved towards their retracted position. As soon as the pressure bar 45 abuts against the intermediate plate 48, a further movement of the profile elements towards the retracted position leads to a rotary movement of the lifting unit 6 relative to the mounting element 4 towards the transport position, wherein the tension spring 49 is brought into a biased state. This rotary movement of the lifting unit 6 relative to the mounting element 4 is shown in figure 16.

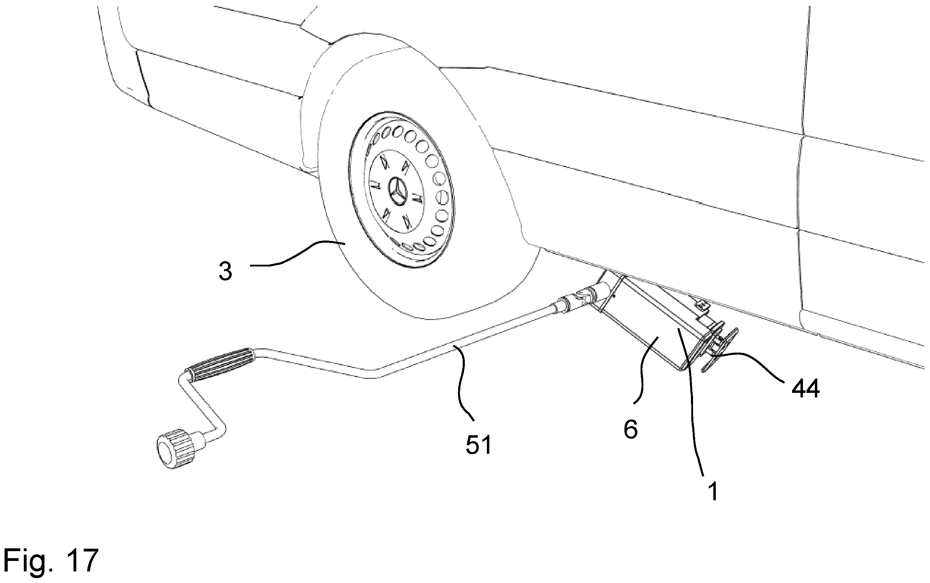

Figure 17 shows a method of actuating the device 2 without operating the electrical drive motor 36, for example, when no electrical energy is available. A corresponding tool 51 is brought into engagement with the engagement contour 41, so that the first spindle 20 can be set in rotation manually via the chain gear 38 and the bevel gear 43.

### List of reference sign

- 1: vehicle
- 2: device
- 3: wheel
- 4: mounting element
- 5: through-hole
- 6: lifting unit
- 7: central opening
- 8: projection
- 9: upper profile element
- 10: intermediate profile element
- 11: lower profile element
- 12: guiding protrusion
- 13: guiding groove
- 14: guiding projection
- 15: guiding deepening
- 16: opening
- 17: bottom wall
- 18: basic element
- 19: spindle drive
- 20: first spindle
- 21: roller bearing
- 22: bearing sleeve
- 23: upper end plate
- 24a,b: clamping element
- 25: holding groove
- 26: first spindle nut
- 27: sleeve
- 28: top plate
- 29: axial roller bearing
- 30: radial protrusion
- 31: screw
- 32: sliding disc
- 33: second spindle
- 34: second spindle nut
- 35: top element
- 36: electrical drive motor
- 37: planetary gear
- 38: chain gear
- 39: chain wheel
- 40: chain wheel
- 41: engagement contour
- 42: auxiliary shaft
- 43: bevel gear
- 44: support element
- 45: pressure bar
- 46: guiding element
- 47: protrusion
- 48: intermediate plate
- 49: tension spring
- 50: control unit
- 51: tool
- P: pivot axis
- X: longitudinal axis
- Y: motor axis
- S: swivel axis

## Claims

1. Device (2) for lifting a vehicle (1), in particular a caravan or a motorhome, wherein the device (2) has a lifting unit (6),
wherein the lifting unit (6) comprises
a plurality of profile elements, in particular exactly three profile elements, which are arranged coaxially to each other and can be displaced telescopically to each other, thus defining a longitudinal axis (X), so that the profile elements can be moved between a retracted position and an extended position in order to vary an effective length of the device (2),
and drive means that are coupled to the profile elements in order to move the profile elements relative to each other and to adjust an effective length of the device (2),
wherein the drive means comprise a spindle drive (19).

2. Device (2) according to claim 1, **characterized in that** the spindle drive (19) is formed as a multiple-stage spindle drive (19), in particular as a two-stage spindle drive (19).

3. Device (2) according to claim 2, **characterized in that** the spindle drive (19) comprises a first spindle (20), which is held rotatably at an upper profile element (9), and a first spindle nut (26) which is in engagement with said first spindle (20) and connected in an axially fixed manner to another profile element, in particular to an intermediate profile element (10), so that a rotary movement of the first spindle (20) can be converted into an axial movement of the other profile element, in particular of the intermediate profile element (10) relative to the upper profile element (9).

4. Device (2) according to claim 2 or 3, **characterized in that** the spindle drive (19) comprises a second spindle (33), which is held rotatably at a profile element, in particular at an intermediate profile element (10), and a second spindle nut (34), which is in engagement with the second spindle and is connected in an axially fixed manner and in a rotationally fixed manner to a lower profile element (11), so that a rotary movement of the second spindle is converted into an axial displacement of the lower profile element (11) relative to the intermediate profile element (10).

5. Device (2) according to claim 3 and to claim 4, **characterized in that** the first spindle nut (26) is held rotatably at the intermediate profile element (10), in particular at a sleeve (27) formed at or fixed to the intermediate profile element (10), and is connected in a rotationally fixed manner to the second spindle (33), wherein, in particular, one of the spindles, preferably the second spindle (33), is formed as a hollow spindle and the other spindle, preferably the first spindle (20), is arranged radially inside the second spindle (33) when the profile elements are in their retracted position.

6. Device (2) according to any of the preceding claims, **characterized in that** the drive means comprise an electrical drive motor (36), wherein the motor axis (Y) extends parallel to the longitudinal axis (X).

7. Device (2) according to claim 6, **characterized in that** transmission means are provided in order to convert a rotary movement of the drive motor (36) into a rotary movement of a spindle of the spindle drive (19), wherein, in particular, the transmission means comprise a planetary gear (37), preferably a one-stage or a two-stage planetary gear (37), wherein, preferably, the planetary gear (37) is arranged coaxially with the motor axis (Y), and/or wherein, in particular, the transmission means comprise a chain gear (38), wherein one chain wheel (39, 40) is preferably connected in a rotationally fixed manner to a spindle of the spindle drive (19) and the other chain wheel (39, 40) is preferably connected to an output shaft of a planetary gear (37).

8. Device (2) according to any of the preceding claims, **characterized in that** the drive means comprise manual operating means, which are arranged and designed such that an operator can adjust the effective length of the lifting unit (6), wherein, in particular, the manual operating means comprise an engagement contour (41), preferably having a quadratic or a hexagonal cross-section, so that an operator can bring a corresponding tool (50) in engagement in order to adjust the effective length of the lifting unit (6), wherein, preferably, the engagement contour (41) is coupled to a spindle of the spindle drive (19), in particular via a bevel gear (43), wherein, particularly preferably, the engagement contour (41) is coupled via a bevel gear (43) to an output shaft of the drive motor or of a planetary gear (37).

9. Device (2) according to any of the preceding claims, **characterized in that** it further comprises an upper mounting element (4), which is in particular formed as a plate, wherein the upper mounting element (4) has mounting means in order to attach the device (2) to a bottom side of a vehicle (1).

10. Device (2) according to claim 9, **characterized in that** the lifting unit (6) is held rotatably about a pivot axis (P) at the mounting element (4) between a use position, in which the longitudinal axis (X) extends at least substantially vertically, when the device (2) is mounted to a vehicle (1), and a transport position, in which the longitudinal axis (X) extends at least substantially horizontally, when the device (2) is mounted to a vehicle (1).

11. Device (2) according to claim 10, **characterized in that** it comprises a rotation mechanism in order to move the lifting unit (6) between its use position and its transport position.

12. Device (2) according to claim 11, **characterized in that** the rotation mechanism is designed and arranged such that a rotary movement of a drive motor (36) and/or a spindle (20) is converted into a rotary movement of the lifting unit (6) relative to the mounting element (4).

13. Device (2) according to claim 12, **characterized in that** the rotation mechanism comprises a pressure bar (45), which is held rotatably about a swivel axis (S) at the mounting element (4), wherein the swivel axis (S) is spaced apart from the pivot axis (P) and is guided by a guiding element (46), which is fixed in particular to a lower end section of an outer profile element, and is arranged such that it can abut against a protrusion (47), in particular formed as an intermediate plate (48), at the lower profile element (11), when the profile elements are close to their retracted position so that a movement of the profile elements towards their retracted position leads to a rotary movement of the lifting unit (6) towards the transport position, and a movement of the profile elements out of the retracted position leads to a rotary movement of the lifting unit (6) towards its use position, and/or **in that** the rotation mechanism further comprises retracting means, wherein, in particular, the retracting means comprise a tension spring (49), which is held, at one end, at the mounting element (4) and, at the other end, at the guiding element (46), wherein, preferably, the lengthwise axis of the pressure bar (45) and the effective axis of the tension spring (49) are arranged in the form of an X when seen from a lateral side and when the lifting unit (6) is in its use position.

14. Device (2) according to any of the preceding claims, **characterized in that** the lifting unit (6) comprises a support element (44), which is designed to support the device (2) against the ground when the device (2) is mounted to a vehicle (1), wherein, in particular, the support element (44) is held rotatably at a lower profile element (11), wherein the rotation axis of the upper element preferably extends perpendicularly to the longitudinal axis (X), and/or **in that** the device (2) comprises a control unit which is arranged and designed to control the direction and speed of rotation of the drive motor, wherein, in particular, the control unit comprises communication means, which are arranged and designed such that they can communicate with a remote control unit, in particular via a wireless connection, preferably via a Bluetooth connection.

15. System comprising a plurality of devices (2), in particular four devices (2), according to any of the preceding claims, wherein, in particular, the devices (2) comprise a control unit which is arranged and designed to control the direction and speed of rotation of the drive motor, wherein, preferably, the control unit comprises communication means, which are arranged and designed such that they can communicate with a remote control unit, in particular via a wireless connection, preferably via a Bluetooth connection, wherein, particularly preferably, the communication means of the devices (2) are designed and arranged to communicate with one single remote control unit.

16. Vehicle (1), in particular caravan or motorhome, with a system according to claim 15.
